# EUROPÄISCHE PATENTANMELDUNG

(11) **EP 2 810 728 A1**
(43) Veröffentlichungstag der Anmeldung: **10.12.2014**
(21) Anmeldenummer: 13002858.2
(22) Anmeldetag: 03.06.2013
(51) Int. Cl.: B23F 21/16

(54) **Wälzfräswerkzeug zur Herstellung einer Innenverzahnung an einem Werkstück**

(71) Anmelder: LMT Fette Werkzeugtechnik GmbH & Co. KG, 21493 Schwarzenbek (DE)
(72) Erfinder: Schmidt, Siegfried, 21509 Glinde (DE); Dowidat, Martin, 21514 Siebeneichen (DE); Koletzki, Uwe, 23881 Breitenfelde (DE); Hameister, Simone, 19258 Boizenburg OT Vier (DE); Weger, Stephan, 22089 Hamburg (DE); Carmincke, Wolfgang, 21379 Scharnebeck (DE)
(74) Vertreter: Hauck Patent- und Rechtsanwälte

(57) **Zusammenfassung**

Die Erfindung betrifft ein Wälzfräswerkzeug zur Herstellung einer Innenverzahnung an einem Werkstück, wobei eine Mehrzahl von wechselbaren Schneidplatten mit jeweils mindestens einer Schneidkante vorgesehen ist, die Länge der Schneidkanten zumindest einiger Schneidplatten kürzer ist, als die Zahnhöhe der herzustellenden Innenverzahnung, die Schneidplatten an einem kragenartigen Trägerprofil angeordnet sind, wobei das Trägerprofil, mindestens einen Gang bildend, entlang einer Schraubenlinie am Umfang eines Grundkörpers des Wälzfräswerkzeugs verläuft, unterschiedliche Typen von Schneidplatten vorgesehen sind und das Trägerprofil entlang der Schraubenlinie n Abschnitte mit jeweils bezüglich ihrer Winkellage und/oder ihrem radialen Abstand zur Drehachse des Grundkörpers unterschiedlich positionierten Schneidplatten aufweist, so dass sich entlang des Trägerprofils die Form der durch die Schneidplatten der Abschnitte jeweils ausgebildeten Hüllschnitte ändert und wobei mehr Abschnitte vorgesehen sind als Typen von Schneidplatten.

## Beschreibung

Die Erfindung betrifft ein Wälzfräswerkzeug zur Herstellung einer Innenverzahnung an einem Werkstück.

Die Herstellung von Innenverzahnungen in der Weichbearbeitung erfolgt herkömmlich durch Wälzstoßen, Räumen und Formfräsen mit einem oder mehreren parallelen Werkzeugen (Duplex - Triplex Fräser) sowie Innenwälzfräsen (reine Fertigbearbeitung) mit einteiligen Werkzeugen aus einem homogenem Schneidstoff.

Als Werkzeuge mit Wendeschneidplatten sind bekannt Wälzstoßen mit Stoßrad sowie Formfräser mit Wendeschneidplatten.

Aus DE 124 786 (B) ist ein doppelkegliger, schraubenförmiger Abwälzfräser zur Herstellung von gerad- und schrägverzahnten, evolventenförmigen Innenzahnkränzen bekannt geworden. Für die Herstellung einer Innenverzahnung ist der Wälzfräser auf der Mantelfläche seiner Doppelkegelform mit feststehenden Werkzeugschneiden ausgestattet.

Aus EP 2 260 964 (A1) ist eine Vorrichtung zum Herstellen einer Innenverzahnung bekannt geworden, bei dem die Innenverzahnung durch das Vorschieben eines kreisscheibenförmigen Fräser tangential zur Innenwandung eines Werkstücks erzeugt wird. Der Fräser ist mit mindestens einem feststehenden Fräszahn ausgestattet.

DE 2 827 145 (A1) und US 4,202,222 beschreiben einen kugelförmigen Wälzfräser zur Herstellung innenverzahnter Rädern, der an seiner kugelförmigen Oberfläche mit integral ausgebildeten Schneidflächen ausgestattet ist. Die Schneidflächen verlaufen an der Oberfläche des Wälzfräsers in einer Schraubenlinie.

DE 1 083 620 beschreibt einen weiteren Wälzfräser für die Herstellung einer Innenverzahnung, bei dem die Zähne einteilig mit dem Werkzeug ausgebildet sind. Die Zähne des Werkzeugs entsprechen innerhalb des Eingriffsbereichs einer auswälzbaren Zahnform je Flankenseite nur einem Punkt oder einem Sektor der Eingriffslinie, der Eingriffsteilung und dem Eingriffswinkel der Soll-Radzahnflanke.

Aus CN 101066568 ist ein ellipsenformiger Wälzfräser für die Herstellung einer Innenverzahnung bekannt geworden, bei dem die Schneidkanten auf einem ellipsenförmigen Zahnkranz angeordnet sind.

Nachteilig bei den bekannten Wälzfräsern zur Herstellung von Innenverzahnungen ist die eingeschränkte Anpassungsmöglichkeit der Werkzeugschneiden bezüglich unterschiedlicher herzustellender Zahnprofile. Außerdem sind Reparatur und Instandsetzung feststehender Werkzeugschneiden besonders aufwendig und kostenintensiv.

Der Erfindung liegt die Aufgabe zugrunde, ein Wälzfräswerkzeug zur Herstellung einer Innenverzahnung bereitzustellen, das einfach und kostengünstig instandgesetzt werden kann. Gleichzeitig soll eine einfache Möglichkeit geschaffen werden, das Wälzfräswerkzeug auf unterschiedliche Flankenformen der herzustellenden Innenverzahnung abzustimmen.

Diese Aufgabe wird durch ein Werkzeug mit den Merkmalen des Anspruchs 1 gelöst.

Bei dem erfindungsgemäßen Wälzfräswerkzeug zur Herstellung einer Innenverzahnung an einem Werkstück sind eine Mehrzahl von wechselbaren Schneidplatten mit jeweils mindestens einer Schneidkante vorgesehen. Die Länge der Schneidkanten zumindest einiger Schneidplatten ist kürzer, als die Zahnhöhe der herzustellenden Innenverzahnung. Die Schneidplatten sind an einem kragenartigen Trägerprofil angeordnet, wobei das Trägerprofil, mindestens einen Gang bildend, entlang einer Schraubenlinie am Umfang eines Grundkörpers des Wälzfräswerkzeugs verläuft. Es sind unterschiedliche Typen von Schneidplatten vorgesehen und das Trägerprofil weist entlang der Schraubenlinie n Abschnitte mit jeweils bezüglich ihrer Winkellage und/oder ihrem radialen Abstand zur Drehachse oder Längsachse des Grundkörpers unterschiedlich positionierten Schneidplatten auf, so dass sich entlang des Trägerprofils die Form der durch die Schneidplatten der Abschnitte jeweils ausgebildeten Hüllschnitte ändert. Erfindungsgemäß sind mehr Abschnitte vorgesehen als Typen von Schneidplatten. Das Trägerprofil hat insbesondere eine Trapezform. Durch den Einsatz wechselbarer Schneidplatten kann das Schneidprofil des Werkzeugs bei gleichbleibendem Trägerprofil auf unterschiedliche Formen bzw. Typen der herzustellenden Verzahnung angepasst werden. Die auf die herzustellende Verzahnung angepasste Ersatzgeometrie des Werkzeugs kann auf einfache Weise durch die wechselbaren Schneidplatten abgebildet werden.

Vorzugsweise sind zumindest einige der Schneidplatten Wendeschneidplatten, die jeweils mehr als eine Schneidkante aufweisen. Bei Verschleiß oder Beschädigung einer Schneidkante kann die Schneidplatte vom Trägerprofil gelöst und für den Einsatz mit einer anderen Schneidkante in einer geänderten Stellung wieder montiert werden. Bevorzugt weisen zumindest einige der Schneidplatten jeweils zwei Schneidkanten auf.

Der erfindungsgemäße Einsatz von wechselbaren Schneidplatten für das Wälzfräsen einer Innenverzahnung hat den Vorteil, dass dadurch eine höhere Schnittgeschwindigkeit und eine höhere Produktivität erzielt werden kann. Darüber hinaus wird durch die Verwendung wechselbarer Schneidplatten die Möglichkeit geschaffen, die Teilungs- und Profilgenauigkeit der herzustellenden Verzahnung gegenüber Formfäsern mit Schneidplatten zu verbessern. Vorzugsweise weisen zumindest einige der Schneidplatten jeweils ein Substrat bzw. eine Spanleitstufe zur Ableitung von Frässpänen auf.

Weiter bevorzugt sind zumindest einige Schneidplatten an dem Trägerprofil in Spannutensteigung angeordnet. Bei dieser Anordnung weisen die Schneidkanten zumindest einiger, entlang der Schraubenlinie des Trägerprofils benachbart liegender, Schneidplatten einen drallförmigen Versatz zu einer Linie auf, die in einem Abstand parallel zur Drehachse oder Längsachse des Werkzeug-Grundkörpers verläuft.

Befestigungsmittel sind zur Befestigung der Schneidplatten am Trägerprofil vorgesehen. Vorzugsweise sind die Schneidplatten mittels Schrauben am Trägerprofil befestigbar. Vorzugsweise sind die Schneidplatten jeweils tangential an dem Trägerprofil und in seinem Scheitelbereich befestigt. Des Weiteren können zumindest einige Schneidplatten im Fußbereich, d.h. im unteren Bereich des Trägerprofils befestigt sein.

Vorzugsweise decken die Schneidkanten der Schneidplatten entlang des Trägerprofils die Eingriffslinie zwischen dem Wälzfräswerkzeug und dem Werkstück ab. Durch diese Anordnung kann jeder Punkt des Flankenprofils der herzustellenden Verzahnung von den Schneidkanten des Werkzeugs erreicht werden.

In einer bevorzugten Ausgestaltung ist die vorgesehene Form einer Zahnlücke der herzustellenden Verzahnung erst durch die Überlagerung der Hüllschnitte aller Abschnitte des Trägerprofils abgebildet.

In einer Ausgestaltung beträgt die Bogenlänge des Trägerprofils mindestens das Einfache, vorzugsweise mindestens das Eineinhalbfache oder mindestens das Zweifache des Umfangs des Grundkörpers.

Vorzugsweise sind an dem Wälzfräswerkzeug Schrupp- und/oder Schlicht-Schneidplatten vorgesehen. Bei einem Werkzeug mit Schrupp- und Schlicht-Schneidplatten kann die Vor- und Fertigbearbeitung durch ein Werkzeug erfolgen. Bei dieser kombinierten Ausführung besteht keine Notwendigkeit, das Werkzeug während der Bearbeitungsschritte auszutauschen oder die Schneidplattentypen des Werkzeugs zu wechseln. Alternativ kann vorgesehen sein, das Werkzeug nur mit Schrupp- oder nur mit Schlicht-Schneidplatten auszustatten. Dies hat den Vorteil einer gezielten, auf das Werkstück abgestimmten Bearbeitung.

In einer bevorzugten Ausgestaltung weist das Wälzfräswerkzeug zehn oder weniger als zehn oder sechs oder weniger als sechs unterschiedliche Typen von Schneidplatten auf. Insbesondere kann vorgesehen sein, dass das Wälzfräswerkzeug fünf oder weniger als fünf oder vier oder weniger als vier unterschiedliche Typen von Schneidplatten aufweist. Die unterschiedlichen Typen von Schneidplatten können sich in der Auswahl des Materials, Substrats, Härtegrad oder anderer Materialeigenschaften unterscheiden. Weiter können sich die Typen durch Ihre Form bzw. Größe unterscheiden. Vorzugsweise sind bei der Kombination von Schrupp- und Schlicht-Schneidplatten zehn oder weniger als zehn oder sechs oder weniger als sechs unterschiedliche Typen von Schneidplatten vorgesehen. Denkbar ist eine Ausgestaltung, bei der die Anzahl der Typen von Schrupp-Schneidplatten um zwei geringer ist, als die Anzahl der Schlicht-Schneidplatten.

In einer Ausgestaltung weist das Wälzfräswerkzeug ausschließlich Schlicht-Schneidplatten auf, wobei fünf oder weniger als fünf unterschiedliche Typen von Schneidplatten vorgesehen sind. Es ist außerdem denkbar, dass das Wälzfräswerkzeug ausschließlich Schrupp-Schneidplatten aufweist.

Vorzugsweise weisen die Schneidplatten spanbrechende und/oder spanleitende Strukturen auf. Die Strukturen können insbesondere als Spanleitstufe ausgebildet sein. Derartige Strukturen ermöglichen das kontrollierte Brechen bzw. Ableiten von Spänen bei der Bearbeitung des Werkstücks.

In einer bevorzugten Ausgestaltung sind die Schneidplatten in einem Abstand zur Drehachse oder Längsachse des Grundkörpers angeordnet, wobei sich in Trägerprofilrichtung der jeweilige Abstand für zumindest eine Gruppe aufeinanderfolgender Schneidplatten verringert. Vorzugsweise ist eine Gruppe Schneidplatten an einer ersten Seite des Trägerprofils angeordnet. Insbesondere ist eine Gruppe an einer ersten Seite eines Gangs des Trägerprofils angeordnet.

In einer Ausgestaltung sind zumindest einige der Schneidplatten in ihrer Winkellage und/oder in ihrem radialen Abstand zur Drehachse oder Längsachse des Grundkörpers abstimmbar. Vorzugsweise fallen Drehachse und Längsachse des Grundkörpers zusammen. Durch diese Ausgestaltung kann der Steigungswinkel der Schneidplatten bzw. der Schneidkanten entlang des Trägerprofils variiert werden. Der radiale Abstand zur Drehachse bzw. zur Längsachse ist insbesondere der Abstand zwischen der Drehachse bzw. der Längsachse und dem in radialer Richtung gesehene Beginn der Schneidkante einer Schneidplatte. Durch die Abstimmbarkeit der Schneidplatten können z.B. Fertigungs- und/oder Montagetoleranzen ausgeglichen werden.

Die Winkellage und/oder der Abstand der Schneidplatten zur Drehachse oder zur Längsachse des Grundkörpers kann insbesondere durch Unterlegplatten und/oder Abstimmplatten abstimmbar sein. Die Unterlegplatten sind dabei jeweils zur Montage zwischen dem Trägerprofil und den Schneidplatten vorgesehen. Die Abstimmplatten sind jeweils zur Montage radial unterhalb der Schneidplatten vorgesehen. Durch die Ausgestaltung der jeweils an die Schneidplatten grenzenden Auflageflächen der Unterlegplatten bzw. Abstimmplatten können die Schneidplatten in ihrer Lage bezüglich der Dreh- oder Längsachse des Grundkörpers abgestimmt sein. Die Lage der Schneidplatten kann des Weiteren durch die Ausgestaltung der, in der montierten Position an das Trägerprofil angrenzenden Unterseite der Unterlegplatte bestimmt sein. Die Ausgestaltung der Auflageflächen kann z.B. durch das Abtragen von Material bzw. durch die Verwendung von Unterlegplatten bzw. Abstimmplatten mit einem Übermaß vorgegeben sein. Die Bearbeitung der Abstimmplatten und Unterlegplatten kann dabei durch bekannte Arten der Materialbearbeitung wie z.B. gerades oder winkliges Abschleifen oder dergleichen erfolgen.

In einer bevorzugten Ausgestaltung ist das Trägerprofil in Teilstücke unterteilt, wobei die Teilstücke an Bogensegmenten angeordnet sind und wobei die Bogensegmente am Umfang des Grundkörpers befestigbar sind. Dies hat den Vorteil einer einfachen und kostengünstigen Austauschbarkeit verschlissener bzw. beschädigter Teilstücke des Trägerprofils. Vorzugsweise sind die Teilstücke mit den Bogensegmenten mittels Schrauben am Werkzeug-Grundkörper befestigbar. Denkbar ist auch, dass die Bogensegmente mit dem Grundkörper nicht lösbar verbunden sind.

Vorzugsweise weisen die Bogensegmente und/oder der Grundkörper Mittel und/oder Markierungen auf, mit denen zumindest einige Bogensegmente zu einer vorgesehenen Position am Grundkörper zuordenbar sind.

In einer bevorzugten Ausgestaltung sind zumindest einige der Schneidplatten benachbarter Gänge so versetzt zueinander angeordnet, dass sie durch eine in einer Spankammer eines Gangs des Trägerprofils gebildeten Lücke an dem benachbarten Gang befestigbar sind. Vorzugsweise sind zumindest einige der Schneidplatten im scheitelnahen Bereich des Trägerprofils derart angeordnet, dass sie durch eine Lücke in einer benachbarten Spankammer hindurch an dem Trägerprofil befestigbar sind. Zur Befestigung kann insbesondere ein gerader Schaft eines Schraubendrehers oder dergleichen dienen. Somit sind die jeweiligen Schneidplatten in einfacher Weise unter Zuhilfenahme handelsüblicher bzw. einfach herzustellender Werkzeuge an den Flanken des Trägerprofils befestigbar.

Für Schneidplatten, die nicht über Spankammerlücken benachbarter Gänge des Trägerprofils erreichbar sind, kann z.B. der Einsatz eines speziellen Werkzeugs mit einer um 90° abgewinkelten Werkzeugspitze vorgesehen sein. Alternativ oder zusätzlich können Bohrungen in den Gängen des Trägerprofils vorgesehen sein, über die die Schneidplatten benachbarter Gänge erreichbar sind.

Für die Befestigung an dem Trägerprofil weisen die Schneidplatten vorzugsweise mindestens eine, insbesondere senkrecht zu ihrer Grundfläche angeordnete Bohrung auf. Abweichend davon kann zumindest bei einigen der Schneidplatten mindestens eine Bohrung in einem Winkel, schräg zur Grundfläche der Schneidplatte vorgesehen sein. Über eine winklige Bohrung kann eine Schneidplatte in einfacher Weise mit einem handelsüblichen Werkzeug mit gerader Werkzeugklinge aus einer schrägen Richtung an dem Trägerprofil befestigt werden.

In einer weiteren Ausgestaltung sind die Schlicht-Schneidplatten zumindest abschnittsweise in gleicher Winkellage angeordnet. Die Winkellage bezieht sich beispielsweise auf die Drehachse oder die Längsachse des Grundkörpers bzw. eine gedachte Linie, die senkrecht auf der Drehachse oder auf der Längsachse des Grundkörpers steht bzw. auf eine gedachte Linie, die in einem Abstand parallel zur Drehachse oder zur Längsachse des Grundkörpers verläuft. In dieser Ausgestaltung sind die Schlicht-Schneidplatten zumindest abschnittsweise im gleichen Teilungswinkel angeordnet.

Nachfolgend ist die Erfindung in bevorzugten Ausführungsformen anhand von Zeichnungen näher erläutert. Es zeigen:
- Fig. 1: ein erfindungsgemäßes Wälzfräswerkzeug in einer schematischen und perspektivischen Darstellung im Eingriff mit einem Werkstück,
- Fig. 2: das erfindungsgemäße Wälzfräswerkzeug aus Fig. 1 in einer perspektivischen Gesamtansicht,
- Fig. 3: eine Detailansicht des Wälzfräswerkzeugs aus Fig. 1 in einer perspektivischen Darstellung,
- Fig. 4: eine Schnittdarstellung im Bereich des Trägerprofils des Wälzfräswerkzeugs aus Fig. 1,
- Fig. 5: ein erfindungsgemäßes Wälzfräswerkzeug mit einer ersten Anordnung Schneidplatten in einer Seitenansicht,
- Fig. 6: ein erfindungsgemäßes Wälzfräswerkzeug mit einer zweiten Anordnung Schneidplatten in einer Seitenansicht,
- Fig. 7: das Wälzfräswerkzeug aus Fig. 1 mit einer kombinierten Anordnung Schneidplatten gemäß Fig. 5 und Fig. 6 in einer Seitenansicht,
- Fig. 8: eine Schneidplatte in schematisch perspektivischer Darstellung,
- Fig. 9: eine Schneidplatte aus Fig. 8 mit zusätzlicher Spanleitstufe in schematisch perspektivischer Darstellung,

- Fig. 10: eine Schneidplatte aus Fig. 8 in einer Anordnung mit einer Unterlegplatte und einer Abstimmplatte,
- Fig. 11: eine Explosionsdarstellung der Anordnung aus Fig. 10.

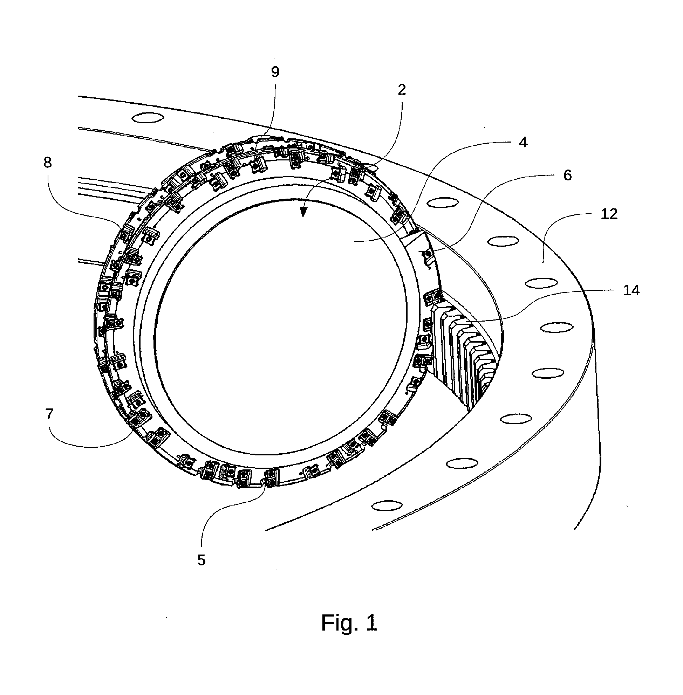

Figur 1 zeigt ein Wälzfräswerkzeug 2 mit einem etwa zylindrischen Grundkörper 4, der an seiner Mantelfläche ein kragenartiges Trägerprofil 6 besitzt. Das Trägerprofil 6 hat eine von der Mantelfläche des Grundkörpers 4 ausgehend und dazu etwa radial nach außen weisende, sich zuspitzende Form und windet sich in Umfangsrichtung in einer Schraubenlinie um den Grundkörper 4. Durch diesen Verlauf bildet das Trägerprofil 6 am Umfang des Grundkörpers 4 nebeneinander liegende Kränze bzw. Gänge 11. Der Querschnitt des Trägerprofils 6, in Umlaufrichtung gesehen, bildet etwa ein Trapez mit einer abgerundeten Scheitelform. Das Trägerprofil 6 ist an seinen seitlichen Flanken und im Bereich seines Scheitels der Länge nach verteilt mit Schneidplatten 7, 8, 9 ausgestattet. Spankammern 5 sind den Schneidplatten 7, 8, 9 zugeordnet. Die Spankammern 5 sind den Schneidplatten 7, 8 ,9 in Wälzrichtung gesehen vorgelagert. Spankammerlücken, die sich durchgehend zwischen zwei angrenzenden Flanken eines Trägerprofilgangs erstrecken, sind insbesondere an den Spankammern 5 am Scheitel des Trägerprofils 6 ausgebildet. In Figur 1 ist exemplarisch dargestellt, wie das Wälzfräswerkzeug 2 in eine herzustellende Innenverzahnung 14 eines Werkstücks 12 eingreift. Exemplarisch ist dazu ein Bogensegment eines Werkstücks 12 dargestellt, dass im Halbkreis um das innen liegende Wälzfräswerkzeug 2 angeordnet ist. Deutlich zu erkennen ist die teilweise bereits ausgebildete Verzahnung 14 perspektivisch rechts des Wälzfräswerkzeugs 2 und die Rohkörperform des Werkstücks 12 ohne Verzahnung 14 perspektivisch links des Wälzfräswerkzeugs 2.

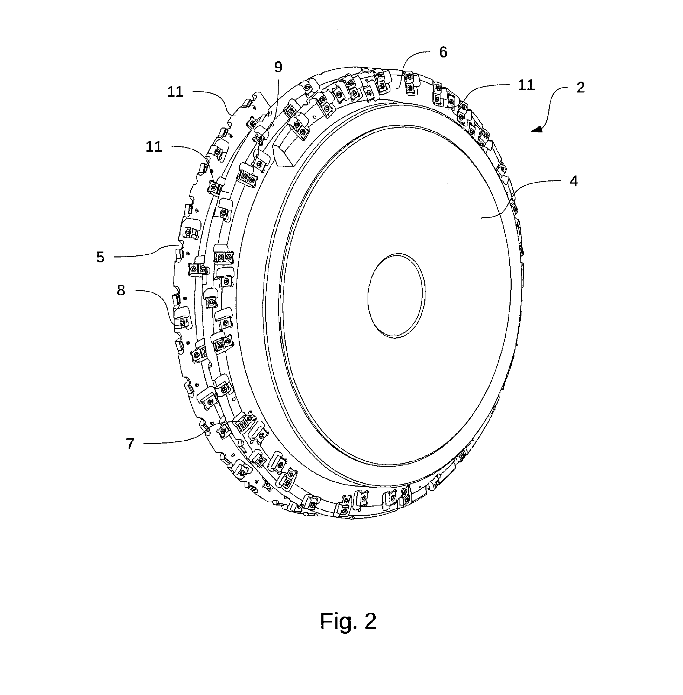

Figur 2 zeigt das Wälzfräswerkzeug 2 aus Fig. 1 in einer perspektivischen Darstellung ohne das Werkstück 12. Deutlich zu erkennen ist, wie das Trägerprofil 6 in einer Schraubenlinie an der Mantelfläche des Grundkörpers 4 angeordnet ist. Das Trägerprofil 6 bildet entlang des Grundkörpers 4 drei Gänge 11. Die Schneidplatten 7, 8, 9 sind an den Flanken und am Scheitel des Trägerprofils 6 angeordnet. Der Abstand einer Gruppe von in Umlaufrichtung des Trägerprofils 6 aufeinander folgenden Schneidplatten 7, 8, 9 vergrößert sich in einer bzw. verkleinert sich in der anderen Richtung, so dass die Flanken der herzustellenden Verzahnung 14 bei einer Rotation des Wälzfräswerkzeugs 2 vollständig durch die Schneidplatten 7, 8, 9 abgedeckt werden. Der sich sukzessiv vergrößernde bzw. verkleinernde Abstand der Schneidplatten 7, 8, 9 ist in Fig. 1 exemplarisch durch ein an dem Trägerprofil 6, zu seinem Scheitel bzw. zu seiner Basis hin, verlaufendes Band gezeigt.

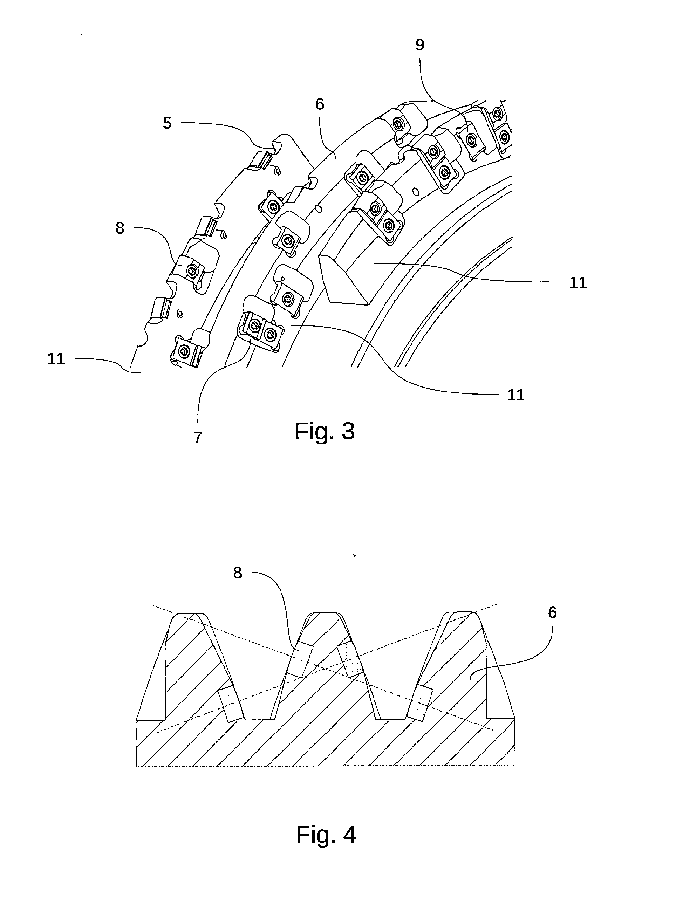

Figur 3 zeigt ein Segment des Wälzfräswerkzeugs 2 in einer perspektivischen Detailansicht. Deutlich zu erkennen sind die Schneidplatten 7, 8, 9, die in der Spitze und an den Flanken des Trägerprofils 6 angeordnet sind. Den Schneidplatten 7, 8, 9 sind Spankammern 5 vorgelagert. Die sich zuspitzende Form des Querschnitts des Trägerprofils 6 ist deutlich zu erkennen. Bei 11 sind drei durch den schraubenlinienartigen Verlauf des Trägerprofils 6 gebildete Gänge des Wälzfräswerkzeugs 2 zu erkennen.

Figur 4 zeigt eine Schnittdarstellung des kragenartigen Trägerprofils 6 in Umfangsrichtung des Grundkörpers 4.

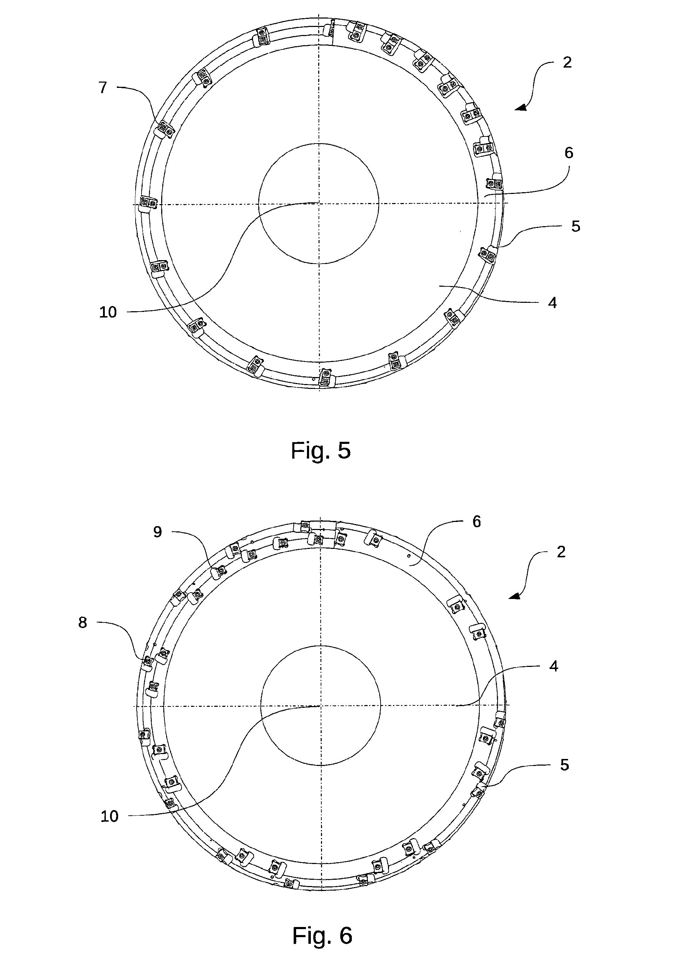

Figur 5 zeigt ein Wälzfräswerkzeug 2 mit einer ersten Anordnung Schneidplatten 7 in einer Seitenansicht. Der einzige Unterschied zum Wälzfräswerkzeug 2 aus Fig. 1 besteht darin, dass weniger Schneidplattentypen vorgesehen sind. In der Seitenansicht ist zu erkennen, wie das Trägerprofil 6, beginnend am perspektivisch oberen Ende des Wälzfräswerkzeugs 2, an der Mantelfläche des Grundkörper 4 entlang verläuft und nach einem Umlauf, bedingt durch seine schraubenlinienförmige Anordnung hinter den Beginn des Profils tritt. Deutlich zu erkennen ist, dass sich der Winkelabstand der aufeinander folgenden Schneidplatten 7 an der abgebildeten Flanke des Trägerprofils 6 in Uhrzeigerichtung, beginnend am perspektivisch oberen Ende des Wälzfräswerkzeugs 2, zunehmend vergrößert. Weiter ist exemplarisch an dem vom Scheitel des Trägerprofils 6 in Richtung seiner Basis verlaufenden Band der sich zur Mantelfläche des Grundkörpers hin sukzessiv verringernde Abstand der Schneidplatten 7 zu erkennen. Mittig am Grundkörper 4 befindet sich bei 10 die Drehachse des Wälzfräswerkzeugs 2.

Figur 6 zeigt ein Wälzfräswerkzeug 2 mit einer zweiten Anordnung Schneidplatten 8, 9 in einer Seitenansicht. Der einzige Unterschied zum Wälzfräswerkzeug 2 aus Fig. 1 besteht darin, dass weniger Schneidplattentypen vorgesehen sind.

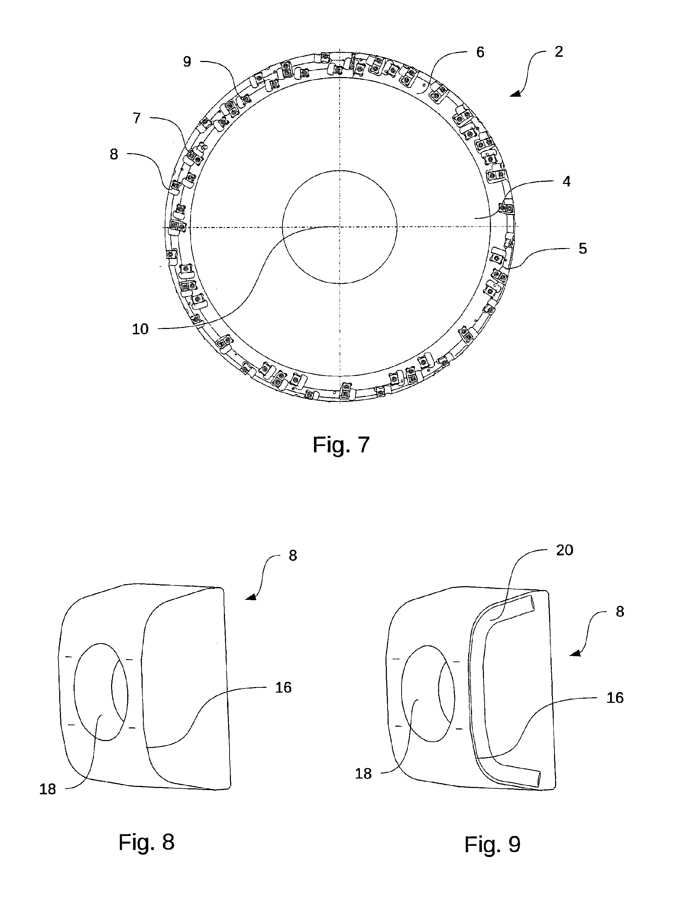

Figur 7 zeigt das Wälzfräswerkzeug 2 aus Fig. 1 mit einer Kombination der Anordnung von Schneidplatten 7, 8, 9 aus Fig. 5 und Fig. 6.

Figuren 8 und 9 zeigen jeweils eine Schneidplatte 8, die eine, auf der perspektivisch abgekehrten Seite, etwa rechteckige, ebene Grundfläche besitzt (nicht dargestellt). In senkrechter Richtung zur Grundfläche erstreckt sich eine Materialwölbung die einen insgesamt etwa quaderartigen Grundkörper bildet. An der der Grundfläche gegenüberliegenden Seite ist der Grundkörper der Schneidplatte 8 an zwei gegenüberliegenden Kanten abgerundet. Zumindest eine der quer zu den abgerundeten Kanten liegende Kante bildet eine Schneidkante 16. Eine vorzugsweise senkrecht zur Grundfläche ausgerichtete Bohrung 18 erstreckt sich etwa zentral durch den Grundkörper hindurch. Alternativ kann die Bohrung 18 in einem Winkel, schräg zur Grundfläche durch den Grundkörper verlaufen. Über diese Bohrung ist die Schneidplatte 8 mittels einer Schraube an dem Trägerprofil 6 des Wälzfräswerkzeugs 2 (nicht dargestellt) befestigbar. Im Unterschied zur Schneidplatte 8 aus Fig. 8 ist bei der Schneidplatte 8 in Fig. 9 unterhalb der Schneidkante 16 eine Spanleitstufe 20 angeordnet. Die Spanleitstufe 20 ist als kanalartige Vertiefung in die unterhalb der Schneidkante 16 befindliche Seitenfläche des Grundkörpers eingelassen und verläuft in einem Abstand zumindest in einem Teilstück etwa parallel zu der Schneidkante 16.

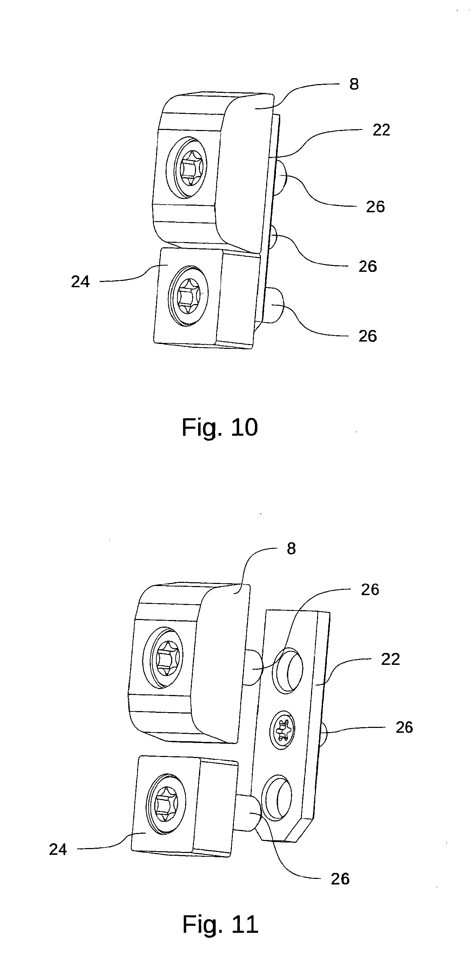

Figuren 10 und 11 zeigen perspektivisch jeweils eine Schneidplatte 7, 8, 9 mit einer Unterlegplatte 22 und einer Abstimmplatte 24. Fig. 10 zeigt die Bauteile in einer zusammengesetzten Anordnung, wie vorgesehen für die Montage auf einem Trägerprofil 6 (nicht dargestellt). Fig. 11 zeigt die Anordnung aus Fig. 10 in einer Explosionsdarstellung. Die Unterlegplatte 22 hat eine etwa streifenförmige, flache Grundform, wobei ein erstes längliches Ende der Streifenform in eine abgestumpfte Spitzform zuläuft. Die Abstimmplatte 24 hat eine etwa quaderförmige Grundform und weist eine etwa zentral angeordnete Durchgangsbohrung für die Befestigung an dem Trägerprofil 6 (nicht dargestellt) mittels einer Schraube 26 auf. An der Unterlegplatte 22 sind drei Durchgangsbohrungen vorgesehen, wobei eine der Bohrungen für die Befestigung der Unterlegplatte 22 an dem Trägerprofil 6 (nicht dargestellt) mittels einer Schraube 26 vorgesehen ist. Über jeweils eine weitere Bohrung ist die Schneidplatte 7, 8, 9 und die Abstimmplatte 24 mittels einer Schraube 26 an dem Trägerprofil 6 (nicht dargestellt) befestigbar. Die Unterlegplatte 22 ist für die Montage zwischen dem Trägerprofil 6 (nicht dargestellt) und der Schneidplatte 7, 8, 9 mit der Abstimmplatte 24 vorgesehen. Wie in Fig. 10 zu erkennen ist, liegen die Schneidplatte 8, 7, 9 und die Abstimmplatte 24 in der montierten Position jeweils mit ihrer Grundfläche flächig auf der Unterlegplatte 22. Unterhalb der Schneidplatte 7, 8, 9, an dem zugespitzten Ende der Unterlegplatte 22, ist die Abstimmplatte 24 angeordnet, die in der montierten Position mit einer seitlichen Auflagefläche an einer Seite der Schneidplatte 7, 8 ,9 anliegt. Die Winkellage der Schneidplatte 7, 8, 9 bezüglich der Dreh- oder Längsachse des Grundkörpers (nicht dargestellt) ist durch die Form der Unterlegplatte 22 und die Form der Abstimmplatte 24 abstimmbar. Die Winkellage der Schneidplatte 7, 8, 9 kann insbesondere durch eine abgeschrägte Oberseite bzw. Unterseite der Unterlegplatte 22 und/oder durch eine abgeschrägte Auflagefläche der Abstimmplatte 24 vorgegeben sein.

**Bezugszeichenliste**

| | |
|---|---|
| 2 | Wälzfräswerkzeug |
| 4 | Grundkörper |
| 5 | Spankammern |
| 6 | kragenartiges Trägerprofil |
| 7 | wechselbare Schneidplatten |
| 8 | wechselbare Schneidplatten |
| 9 | wechselbare Schneidplatten |
| 10 | Grundkörperachse |
| 11 | Gänge des Trägerprofils |
| 12 | Werkstück |
| 14 | herzustellende Verzahnung |
| 16 | Schneidkante |
| 18 | Befestigungsbohrung |
| 20 | Spanleitstufe |
| 22 | Unterlegplatte |
| 24 | Abstimmplatte |
| 26 | Schraube |

## Patentansprüche

1. Wälzfräswerkzeug zur Herstellung einer Innenverzahnung an einem Werkstück, **dadurch gekennzeichnet, dass**
- eine Mehrzahl von wechselbaren Schneidplatten mit jeweils mindestens einer Schneidkante vorgesehen ist,
- die Länge der Schneidkanten zumindest einiger Schneidplatten kürzer ist, als die Zahnhöhe der herzustellenden Innenverzahnung,
- die Schneidplatten an einem kragenartigen Trägerprofil angeordnet sind, wobei das Trägerprofil, mindestens einen Gang bildend, entlang einer Schraubenlinie am Umfang eines Grundkörpers des Wälzfräswerkzeugs verläuft,
- unterschiedliche Typen von Schneidplatten vorgesehen sind und
- das Trägerprofil entlang der Schraubenlinie n Abschnitte mit jeweils bezüglich ihrer Winkellage und/oder ihrem radialen Abstand zur Drehachse des Grundkörpers unterschiedlich positionierten Schneidplatten aufweist,
- so dass sich entlang des Trägerprofils die Form der durch die Schneidplatten der Abschnitte jeweils ausgebildeten Hüllschnitte ändert und wobei
- mehr Abschnitte vorgesehen sind als Typen von Schneidplatten.

2. Wälzfräswerkzeug nach Anspruch 1, **dadurch gekennzeichnet, dass**
- die Schneidkanten der Schneidplatten entlang des Trägerprofils die Eingriffslinie zwischen dem Wälzfräswerkzeug und dem Werkstück abdecken.

3. Wälzfräswerkzeug nach einem der vorangegangenen Ansprüche, **dadurch gekennzeichnet, dass**
- die vorgesehene Form einer Zahnlücke der herzustellenden Verzahnung erst durch die Überlagerung der Hüllschnitte aller Abschnitte des Trägerprofils abgebildet ist.

4. Wälzfräswerkzeug nach einem der vorangegangenen Ansprüche, **dadurch gekennzeichnet, dass**
- die Bogenlänge des Trägerprofils mindestens das Einfache, vorzugsweise mindestens das Eineinhalbfache oder mindestens das Zweifache des Umfangs des Grundkörpers beträgt.

5. Wälzfräswerkzeug nach einem der vorangegangenen Ansprüche, **dadurch gekennzeichnet, dass**
- Schrupp- und/oder Schlicht-Schneidplatten vorgesehen sind.

6. Wälzfräswerkzeug nach einem der vorangegangenen Ansprüche, **dadurch gekennzeichnet, dass**
- das Wälzfräswerkzeug zehn oder weniger als zehn oder sechs oder weniger als sechs oder fünf oder weniger als fünf oder vier oder weniger als vier unterschiedliche Typen von Schneidplatten aufweist.

7. Wälzfräswerkzeug nach einem der vorangegangenen Ansprüche, **dadurch gekennzeichnet, dass**
- das Wälzfräswerkzeug ausschließlich Schlicht-Schneidplatten aufweist, wobei fünf oder weniger als fünf unterschiedliche Typen von Schneidplatten vorgesehen sind.

8. Wälzfräswerkzeug nach einem der Ansprüche 1 bis 6, **dadurch gekennzeichnet, dass**
- das Wälzfräswerkzeug ausschließlich Schrupp-Schneidplatten aufweist.

9. Wälzfräswerkzeug nach einem der vorangegangenen Ansprüche, **dadurch gekennzeichnet, dass**
- zumindest einige der Schneidplatten spanbrechende und/oder spanleitende Strukturen aufweisen.

10. Wälzfräswerkzeug nach einem der vorangegangenen Ansprüche, **dadurch gekennzeichnet, dass**
- die Schneidplatten in einem Abstand zur Drehachse des Grundkörpers angeordnet sind, wobei sich in Trägerprofilrichtung der jeweilige Abstand für zumindest eine Gruppe aufeinanderfolgender Schneidplatten verringert.

11. Wälzfräswerkzeug nach Anspruch 10, **dadurch gekennzeichnet, dass**
- eine Gruppe Schneidplatten an einer ersten Seite des Trägerprofils angeordnet ist.

12. Wälzfräswerkzeug nach einem der vorangegangenen Ansprüche, **dadurch gekennzeichnet, dass**
- zumindest einige der Schneidplatten in ihrer Winkellage und/oder in ihrem Abstand zur Drehachse oder Längsachse des Grundkörpers abstimmbar sind.

13. Wälzfräswerkzeug nach Anspruch 12, **dadurch gekennzeichnet, dass**
- die Winkellage und/oder der radiale Abstand der Schneidplatten zur Drehachse oder Längsachse des Grundkörpers durch Unterlegplatten und/oder Abstimmplatten abstimmbar ist.

14. Wälzfräswerkzeug nach einem der vorangegangenen Ansprüche, **dadurch gekennzeichnet, dass**
- das Trägerprofil in Teilstücke unterteilt ist, wobei die Teilstücke an Bogensegmenten angeordnet sind und wobei die Bogensegmente am Umfang des Grundkörpers befestigbar sind.

15. Wälzfräswerkzeug nach Anspruch 14, **dadurch gekennzeichnet, dass**
- die Bogensegmente und/oder der Grundkörper Mittel und/oder Markierungen aufweisen, mit denen zumindest einige Bogensegmente zu einer vorgesehenen Position am Grundkörper zuordenbar sind.

16. Wälzfräswerkzeug nach einem der vorangegangenen Ansprüche, **dadurch gekennzeichnet, dass**
- zumindest einige der Schneidplatten benachbarter Gänge so versetzt zueinander angeordnet sind, dass sie durch eine in einer Spankammer eines Gangs des Trägerprofils gebildeten Lücke an dem benachbarten Gang befestigbar sind.

17. Wälzfräswerkzeug nach einem der vorangegangenen Ansprüche, **dadurch gekennzeichnet, dass**
- zumindest einige der Schneidplatten zumindest abschnittsweise in jeweils gleicher Winkellage angeordnet sind.
